Europäisches Patentamt

European Patent Office

Office européen des brevets

(19)

(11) Numéro de publication: **0 215 710 B1**

## (12) FASCICULE DE BREVET EUROPEEN

(45) Date de publication du fascicule du brevet:
06.09.89

(51) Int. Cl.⁴: **C08F 14/18**, C08F 2/18,
B01J 3/02, B01J 3/04

(21) Numéro de dépôt: **86401975.7**

(22) Date de dépôt: **09.09.86**

(54) **Procédé de polymérisation en suspension des fluoroéthylènes.**

(30) Priorité: **17.09.85 FR 8513752**

(43) Date de publication de la demande:
**25.03.87 Bulletin 87/13**

(45) Mention de la délivrance du brevet:
**06.09.89 Bulletin 89/36**

(84) Etats contractants désignés:
**AT BE DE FR GB IT NL SE**

(56) Documents cités:
**GB-A- 1 176 356**

(73) Titulaire: **ATOCHEM, 4 & 8, Cours Michelet La
Défense 10, F-92800 Puteaux(FR)**

(72) Inventeur: **Blaise, Jean, 23, Quai Perrache,
F-69002 Lyon(FR)**

(74) Mandataire: **Foiret, Claude et al, ATOCHEM
Département Propriété Industrielle, F-92091 Paris la
Défense 10 Cédex 42(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit
être formée par écrit et motivée. Elle n'est réputée formée qu'après paiement de la taxe d'opposition (Art. 99(1) Convention sur le
brevet européen).

## Description

La présente invention concerne un procédé de polymérisation en suspension des fluoroéthylènes consistant à éliminer progressivement de l'eau de la charge initiale en cours de polymérisation, et à maintenir la pression dans le réacteur par ajout de monomère.

La polymérisation en suspension des fluoroéthylènes, tels que le fluorure de vinyle, le fluorure de vinylidène, le trifluoréthylène et le tétrafluoréthylène, consistant à polymériser sous pression le monomère dans un milieu aqueux contenant un colloïde protecteur et un catalyseur est connue de longue date. C'est la technique suivie par exemple dans les brevets des Etats-Unis d'Amérique 3 451 985 et 3 475 396, où, pour maintenir la pression dans le milieu de dispersion en cours de polymérisation, on injecte de l'eau dans le milieu réactionnel. Cette technique présente l'inconvénient d'introduire initialement dans le milieu de dispersion la totalité du monomère et du catalyseur, ce qui nécessite un contrôle très sévère de la réaction pour empêcher tout emballement dangereux. Pour éviter cet inconvénient, selon le brevet des Etats-Unis d'Amérique 3 624 064, on démarre la polymérisation seulement avec une partie du monomère, et, du fait de la contraction de volume entraînée par la polymérisation, on compense, pour maintenir la pression, en injectant du monomère. Cette dernière technique présente encore un inconvénient ; pour obtenir une productivité intéressante, il est nécessaire d'introduire initialement dans le réacteur une quantité importante de monomère dans le milieu aqueux, le volume d'eau étant relativement réduit, et, dans ce cas, la suspension initiale est fragile, ce qui entraîne le besoin d'une quantité importante de colloïde protecteur.

Selon l'invention, la polymérisation en suspension des fluoroéthylènes consistant à polymériser le monomère en milieu aqueux sous pression en présence de colloïde protecteur et d'initiateur de polymérisation, est caractérisée en ce qu'en fonction de l'avancement de la polymérisation, on soutire de l'eau du réacteur et que l'on compense la chute de pression par un ajout de monomère.

Cette technique présente l'avantage d'initier la polymérisation dans une quantité d'eau importante, ce qui facilite la mise en suspension de la charge de monomère et conduit à une plus grande stabilité de cette suspension.

Le procédé général de polymérisation en suspension des fluoroéthylènes consiste à introduire sous agitation dans un réacteur contenant de l'eau et un colloïde protecteur, après dégazage, le monomère, un initiateur de polymérisation et, éventuellement, un agent de transfert. La température de polymérisation est habituellement comprise entre 25 et 120°C pour une pression supérieure à 50 bars et, mieux, supérieure à 70 bars. Dès que la polymérisation commence, la pression baisse. Elle est compensée par injection, en continu ou discontinu, de monomère. Il est possible, en début de polymérisation, de laisser chuter la pression jusqu'à 75 % de sa valeur initiale, avant d'injecter une charge de monomère permettant de remonter la pression à la valeur initiale.

Selon l'invention, et de façon préférentielle, lorsqu'au moins environ 25 % en poids de la charge initiale de monomère est polymérisée, on soutire du réacteur, au fur et à mesure de l'avancement de la polymérisation, des quantités d'eau que l'on compense par du monomère de façon à maintenir la pression voulue dans le réacteur. Habituellement, on soutire des quantités d'eau comprises entre 1 et 4 % en poids et par heure de la charge initiale en eau. Ces soutirages, effectués en continu ou en discontinu, peuvent représenter de 1/3 à 1 fois la quantité initiale de monomère.

Le colloïde protecteur est choisi parmi ceux connus et utilisés dans ce genre de polymérisation. A titre d'exemples, on peut citer les méthylcelluloses, les hydroxypropyles celluloses, l'alcool polyvinylique.

Les initiateurs les plus couramment utilisés sont les percarbonates d'alcoyle de $C_3$ à $C_6$ et le perpivalate de brityle tertiaire.

Si on utilise un agent de transfert de chaîne, on peut le choisir parmi ceux connus, comme par exemple les cétones ou esters de $C_3$ à $C_8$ tels l'acétone, les acétates de métyle éthyle ou propyle, les carbonates de méthyle éthyle ou propyle, également les hydrocarbures chlorés de $C_2$ à $C_3$ tels le chloroforme, le trichloroéthylène, le tétrachlorure de carbone.

La réaction de polymérisation s'effectue dans un réacteur possédant les éléments classiques tels que moyen d'agitation, contrôle de température, tubulures d'alimentation. Ce réacteur est cependant caractérisé en ce qu'il possède un moyen d'évacuation de liquide muni d'un moyen de filtration.

Selon le schéma annexé, le moyen d'évacuation 1 peut être une simple tubulure possédant un moyen d'ouverture et de fermeture 2. Le moyen de filtration 3 peut être choisi parmi les systèmes de filtres connus permettant de séparer un solide d'un liquide, les plus courants étant les frittés de verre ou métalliques, ou encore les toiles filtrantes.

Le moyen d'évacuation peut être situé en un point quelconque du réacteur, comme par exemple la tubulure 4, munie d'un robinet 5, dont le moyen de filtration 6 est plongé dans le milieu réactionnel. Le moyen d'évacuation peut également être situé sur une boucle de recirculation.

Selon la technique objet de l'invention, lorsque le moyen d'évacuation est en position ouverte, l'eau du réacteur, sous l'effet de la pression, est envoyée vers l'extérieur, tandis que les particules en suspension plus ou moins polymérisées sont retenues par le moyen de filtration. Une fois le réacteur à nouveau isolé de l'extérieur, la pression est rétablie par ajout de monomère, soit par la même tubulure 1 ou 4 fonctionnant en sens inverse, soit par une tubulure annexe, non représentée sur le schéma.

L'exemple suivant, non limitatif, permet d'illustrer l'invention.

## EXEMPLE

Dans un réacteur sous agitation de 66 l, on introduit 45 l d'eau contenant 20 g de méthylcellulose. On purge le réacteur par un courant de gaz inerte, puis on le met sous un vide de 3.10⁻³ MPA. On introduit 11,7 kg de fluorure de vinylidène. On monte la température à 50°C sous pression de 8,5 MPA et on introduit 11 g de percarbonate d'isopropyle. On maintient la pression par l'introduction du fluorure de vinylidène, puis on monte la température à 80°C progressivement, sans dépasser 8,5 MPA. On maintient ensuite la pression à 8,5 MPA par injection de fluorure de vinylidène. On soutire simultanément de l'eau à la vitesse de 1,5 litre à l'heure au moyen du dispositif schématisé en annexe , le filtre placé en (3), étant constitué par un fritté inox de porosité 40µ situé en fond de cuve. On introduit du percarbonate d'isopropyle à raison de 11 g/h pendant 3 heures. Après 3 heures 1/2 d'injection de fluorure de vinylidène et de soutirage d'eau à 80°C, on arrête l'injection de fluorure vinylidène et le soutirage d'eau ; 37 kg de fluorure de vinylidène ont été introduits en totalité dans le réacteur. On maintient le réacteur à 80°C et 8,5 MPA pendant 1 heure en injectant 600 cm3 d'eau, puis on décomprime et récupère 36,8 Kg de polymère après séchage. On réalise une productivité supérieure à 550 Kg de monomère par m3 de réacteur.

L'addition d'agent de transfert de chaîne dans le réacteur est faite au cours de la réaction, elle permet de moduler la masse moléculaire du polymère, et par conséquent de maîtriser sa rhéologie à l'état fondu.

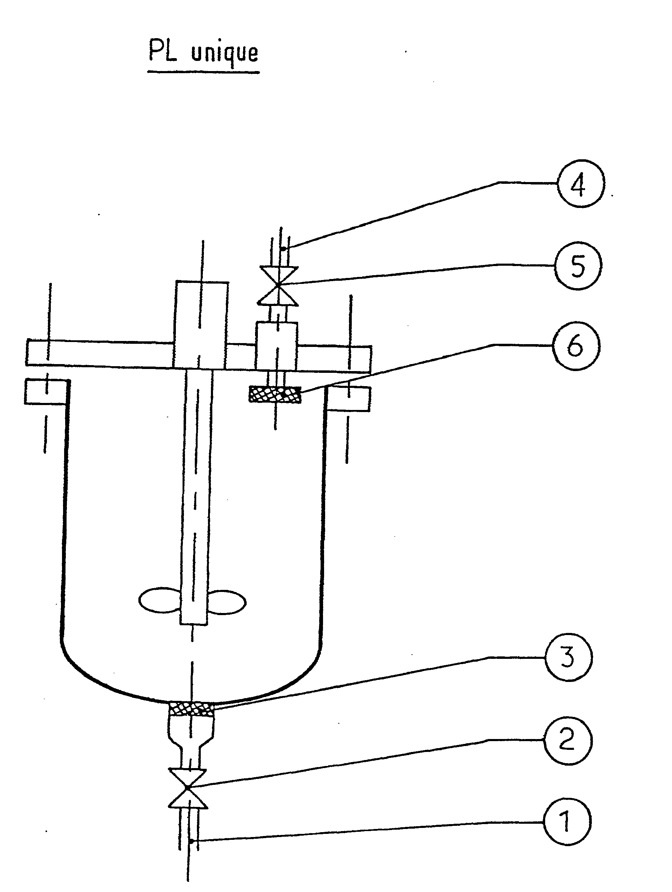

## Revendications

1. Procédé de polymérisation en suspension des fluoroéthylènes consistant à polymériser le monomère en milieu aqueux sous pression en présence de colloïde protecteur et d'initiateur de polymérisation, caractérisé en ce qu'en fonction de l'avancement de la polymérisation, on soutire de l'eau du réacteur que l'on compense, pour maintenir la pression, par un ajout de monomère.

2. Procédé selon la revendication 1, caractérisé en ce que l'on commence à soutirer de l'eau du réacteur quand au moins environ 25 % en poids de la charge initiale de monomère est polymérisée.

3. Procédé selon l'une des revendications 1 et 2, caractérisé en ce que l'on soutire pendant la polymérisation des quantités d'eau comprises entre 1 et 4 % en poids et par heure de la charge initiale en eau.

4. Procédé selon l'une des revendications 1 à 3, caractérisé en ce que l'eau totale soutirée représente de 1/3 à 1 fois la quantité initiale de monomère.

## Patentansprüche

1. Verfahren zur Polymerisation von Fluorethylen in Suspension umfassend das Polymerisieren des Monomeren in wässrigem Milieu unter Druck in Gegenwart eines Schutzkolloids und eines Polymerisationsstarters, dadurch gekennzeichnet, daß man das aufgrund des Fortschreitens der Polymerisation gebildete Wasser aus dem Reaktor abzieht und es durch eine Zugabe an Monomeren kompensiert, um den Druck aufrecht zu erhalten.

2. Verfahren nach Anspruch 1, dadurch gekennzeichnet, daß man beginnt, das Wasser aus dem Reaktor abzuziehen wenn wenigstens etwa 25 Gew.% der anfänglichen Charge des Monomeren polymerisiert sind.

3. Verfahren nach einem der Ansprüche 1 und 2, dadurch gekennzeichnet, daß man im Verlauf der Polymerisation eine Wassermenge abzieht, die zwischen 1 und 4 Gew.% der anfänglichen Wassermenge pro Stunde liegt.

4. Verfahren nach einem der Ansprüche 1 bis 3, dadurch gekennzeichnet, daß das gesamte abgezogene Wasser ein Drittel bis das Einfache der anfänglichen Menge an Monomeren darstellt.

## Claims

1. Process for the polymerisation in suspension of fluoroethylenes consisting of polymerising the monomer in an aqueous medium under pressure in the presence of a protective colloid and polymerisation initiator, characterised in that as the polymerisation advances water is drawn off from the reactor and compensated for by an addition of monomer in order to maintain the pressure.

2. Process as claimed in claim 1, characterised in that drawing off of water from the reactor commences when at least approximately 25%, by weight of the initial charge of monomer is polymerised.

3. Process as claimed in one of claims 1 and 2, characterised in that during the polymerisation quantities of water between 1 and 4% by weight per hour of the initial charge of water are drawn off.

4. Process as claimed in one of claims 1 to 3, characterised in that the total water drawn off represents 1/3 to 1 times the initial quantity of monomer.

EP 0 215 710 B1

PL unique